# EUROPÄISCHE PATENTSCHRIFT

(11) **EP 1 681 100 B1**
(45) Veröffentlichungstag und Bekanntmachung des Hinweises auf die Patenterteilung: **12.03.2014**
(21) Anmeldenummer: 06000561.8
(22) Anmeldetag: 12.01.2006
(51) Int. Cl.: B05B 15/06, B05B 1/18, F16L 27/02

(54) **Brausekopf**
Shower head
Pomme de douche

(30) Priorität: 13.01.2005 DE 202005000881 U
(43) Veröffentlichungstag der Anmeldung: 19.07.2006
(73) Patentinhaber: Hansgrohe SE, 77761 Schiltach (DE)
(72) Erfinder: Blessing, Gerd, 78052 VS-Obereschach (DE)
(74) Vertreter: Patentanwälte Ruff, Wilhelm, Beier, Dauster & Partner

(56) Entgegenhaltungen:
- WO-A-98/05828
- DE-A1- 10 011 504
- GB-A- 792 476
- US-A- 4 850 539

## Beschreibung

Die Erfindung betrifft einen Brausekopf für eine Duscheinrichtung.

Brauseköpfe sind in der unterschiedlichsten Art bekannt. Es gibt Brauseköpfe zur festen Installation im oberen Bereich einer Duschkabine und zur Installation als Seitenbrausen. Üblicherweise haben zur festen Installation bestimmte Brauseköpfe eine Vorderseite, die eine Strahlscheibe aufweist. Aus der Strahlscheibe bzw. den dort vorhandenen Strahlöffnungen tritt das Wasser im Betrieb des Brausekopfs aus. Die dieser Vorderseite abgewandte Rückseite dient dann zum Anbringen des Brausekopfs. In vielen Fällen ist dort eine Schraubverbindung vorgesehen, mit der der Brausekopf an einer Wasserleitung angeschraubt werden kann. Beispielsweise ist eine Überwurfmutter vorgesehen, an der ein Monteur mit einer Zange oder einem Schlüssel angreift.

Um fest installierte Brauseköpfe in der Richtung der abgegebenen Wasserstrahlen ausrichten zu können, haben diese häufig ein Schwenkgelenk, das als Kugelgelenk ausgebildet ist. Es enthält üblicherweise ein Kugelelement, das in einer aus zwei Teilen zusammengesetzten Lagerung gehalten ist. Es kann in alle Richtungen verschwenkt und verdreht werden.

Es gibt nun Fälle, wo sich der Zugriff auf die Rückseite eines Brausekopfs schwierig gestaltet, beispielsweise dann, wenn das Brausekopfgehäuse sehr flach gehalten ist und der Platz hinter dem Brausekopfgehäuse sehr eng ist, oder auch wenn seitlich nur wenig Platz zur Verfügung steht. Es ist auch möglich, dass bei einer versenkten Anbringung ein seitlicher Zugriff auf eine derartige Überwurfmutter oder eine ähnliche Einrichtung erschwert ist.

Bei einer gattungsgemäßen Seitenbrause ist es bekannt, einen Brausekopf in einer Halterung kardanisch zu lagern. Diese Seitenbrause wird in einer Halterung in einer Wand festgelegt und der Anschluss an der Rückseite geschieht mithilfe eines Schlauchs (DE A1-10011504).

Der Erfindung liegt die Aufgabe zu Grunde, einen Brausekopf zu schaffen, der sich auch bei ungünstigen räumlichen Gegebenheiten leicht montieren lässt.

Zur Lösung dieser Aufgabe schlägt die Erfindung einen Brausekopf mit den im Anspruch 1 genannten Merkmalen vor. Weiterbildungen der Erfindung sind Gegenstand von Unteransprüchen.

Der Brausekopf enthält also ein Brausekopfgehäuse, an dessen Rückseite eine Anschlusseinrichtung vorhanden ist. Diese Anschlusseinrichtung dient dazu, das Brausekopfgehäuse an der Wasserleitung durch eine Drehbewegung anzuschließen. Es kann sich um eine Schraubbewegung oder beispielsweise auch um eine Drehbewegung zum Betätigen eines Bajonettverschlusses handeln. Das bislang schon bekannte Schwenkgelenk, das einen sehr einfachen Aufbau aufweist, wird nun so weitergebildet, dass es nach Art eines Kardangelenks in Drehrichtung um die Achse des Anschlusses eine formschlüssige Verbindung zwischen der Anschlusseinrichtung und dem Brausekopfgehäuse ermöglicht. Dadurch wird es möglich, durch Drehen an dem Brausekopfgehäuse die Verbindung zu der Wasserleitung herzustellen, also beispielsweise das Brausekopfgehäuse mit seinem Anschluss auf die Wasserleitung aufzuschrauben. Das Verschwenken des Brausekopfgehäuses, um die Strahlrichtung zu ändern, ist weiterhin in der gleichen Weise möglich wie bei den bisherigen Schwenkgelenken. Eine Verdrehung des Brausekopfs um die Achse des Anschlusses ist im Normalfall nicht erforderlich, da die Brausekopfgehäuse üblicherweise rotationssymmetrisch oder zumindest angenähert rotationssymmetrisch aufgebaut sind.

Insbesondere bei sehr großen Brausekopfgehäusen kann auf diese Weise mit geringem Aufwand eine Montage des Brausekopfgehäuses erfolgen.

In Weiterbildung der Erfindung kann vorgesehen sein, dass das Schwenkgelenk ein Kugelelement aufweist, das in einer Kugelschale schwenkbar gelagert ist.

Insbesondere kann die Kugelschale aus zwei Teilschalen bzw. Kugelschalenelementen aufgebaut sein, die das Kugelelement zwischen sich einschließen.

Das zur Befestigung des Brausekopfs dienende Schwenkgelenk braucht natürlich nur eine Verschwenkung in einem relativ begrenzten Winkelbereich zu ermöglichen.

Erfindungsgemäß kann in Weiterbildung vorgesehen sein, dass in dem Schwenkgelenk mindestens ein Wellenstumpf vorgesehen ist, dessen Achse durch den Kugelmittelpunkt des Kugelelements hindurchgeht. Diese Welle ermöglicht einerseits die Verschwenkung, kann aber andererseits dazu dienen, die Drehmitnahme in der eingangs genannten Richtung zu bewirken.

Insbesondere kann vorgesehen sein, dass der Wellenstumpf in einem der beiden Teile des Schwenkgelenks befestigt und in einer in mindestens angenähert axialer Richtung des Wellenstumpfs verlaufenden Ausnehmung des jeweils anderen Teils des Schwenkgelenks geführt ist, deren Breite dem Durchmesser des Wellenstumpfs entspricht.

Besonders sinnvoll ist es natürlich, wenn zwei derartige Wellenstümpfe vorhanden sind, die in gegenseitiger Verlängerung angeordnet sind.

Es kann erfindungsgemäß ebenfalls vorgesehen sein, dass die beiden in gegenseitiger Verlängerung angeordneten Wellenstümpfe so weit ausgebildet sind, dass sie sich gegenseitig berühren oder sogar ineinander übergehen und damit eine durchgehende Welle bilden.

Das Schwenkgelenk kann in Weiterbildung so ausgebildet sein, dass mindestens ein Wellenstumpf in dem Kugelelement befestigt ist, während die Ausnehmung, in die der Wellenstumpf eingreift, als Schlitz oder Nut in mindestens einem Kugelschalenelement ausgebildet ist.

Erfindungsgemäß kann vorgesehen sein, dass der Schlitz in dem Kugelschalenelement im Bereich seines einen Endes offen ist. Dadurch ist es möglich, das mit dem Wellenstumpf versehene Kugelelement von der Seite des offenen Endes des Schlitzes her axial einzusetzen. Dies erleichtert die Montage des Brausekopfs bei der Herstellung.

Es ist ebenfalls möglich und wird von der Erfindung vorgeschlagen, dass mindestens ein Wellenstumpf in einem Kugelschalenelement befestigt ist, während die Ausnehmung in dem Kugelelement ausgebildet ist.

Hierbei kann mit Vorteil vorgesehen sein, dass die Ausnehmung in dem Kugelelement als Nut ausgebildet ist, die auf Grund der Form der Kugel dann ebenfalls an mindestens einem Ende offen ist. Auch auf diese Weise lässt sich das Schwenkgelenk bei der Herstellung des Brausekopfs leicht zusammensetzen.

In nochmaliger Weiterbildung kann vorgesehen sein, dass das Kugelelement an einem der Anschlusseinrichtung zugeordneten Bauteil ausgebildet ist, während die Kugelschalenlagerung an einem dem Brausekopfgehäuse zugeordneten Bauteil ausgebildet ist, wobei dieses Bauteil auch direkt von dem Brausekopfgehäuse gebildet werden kann.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen Axialschnitt durch eine Anschlusseinrichtung eines Brausekopfs;
- Figur 2: einen Querschnitt durch die Anordnung der Figur 1 längs Linie II-II;
- Figur 3: einen der Figur 1 entsprechenden Teilschnitt bei einer zweiten Ausführungsform.

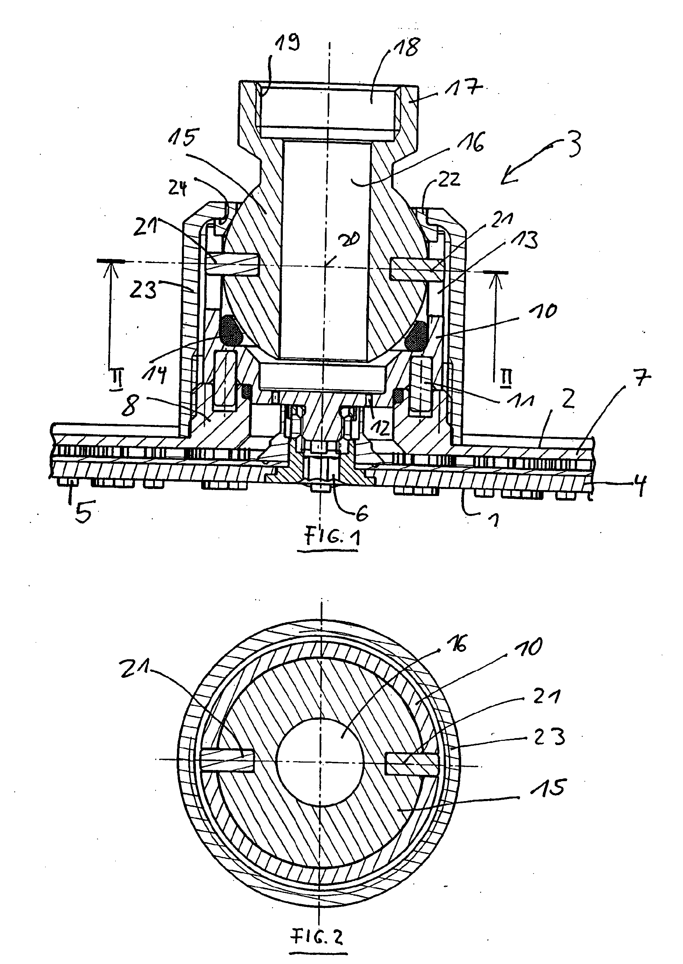

Figur 1 zeigt einen Schnitt durch einen Brausekopf, wobei das Brausekopfgehäuse nur teilweise dargestellt ist. Das Brausekopfgehäuse enthält eine in diesem Fall ebene Vorderseite 1, in Figur 1 unten. Auf der gegenüberliegenden Seite des Brausekopfgehäuses ist eine ebenfalls ebene Rückseite 2 gebildet. In der Mitte der Rückseite 2 ist die Anschlusseinrichtung 3 ausgebildet, die zum Anschluss des Brausekopfs an einer in der Figur nicht dargestellten Wasserleitung dient.

Die Vorderseite 1 des Brausekopfgehäuses wird von einer Strahlscheibe 4 gebildet, die eine Vielzahl von Strahlaustrittsöffnungen in Form von einzelnen aus der Vorderseite heraus ragenden Einsätzen 5 aufweist. In der Mitte der Vorderseite 1 ist eine Luftansaugöffnung 6 vorgesehen, die dazu dient, Luft anzusaugen, damit aus der Strahlscheibe belüftete Wasserstrahlen austreten können.

Die die Rückseite 2 bildende Begrenzungswand 7 des Brausekopfgehäuses enthält zentral einen Ansatz 8, der an seiner Außenseite ein Außengewinde aufweist. In der Mitte ist dieser Ansatz 8 hohl und bildet eine in das Innere des Brausekopfgehäuses führende Öffnung, durch die das Wasser in den Zwischenraum zwischen Strahlscheibe und hinterer Begrenzungswand 7 gelangen kann. Auf die Rückseite des Ansatzes 8, das heißt die von der Strahlscheibe abgewandten Seite, ist ein Lagerschalenelement 10 aufgesetzt, das mit dem Ansatz 8 mit Hilfe von einzelnen Stiften 11 drehfest verbunden ist. Dieses Lagerschalenelement 10 bildet in seinem mittleren Bereich einen Teil der Strahlformungsmittel mit einzelnen Durchtrittsöffnungen 12.

Das Lagerschalenelement 10 bildet in seinem von dem Brausekopfgehäuse abgewandten Endbereich eine zylindrische Hülse. In dieser Hülse sind von dem freien Ende ausgehend zwei Schlitze 13 ausgebildet, und zwar an diametral gegenüberliegenden Stellen. Diese Schlitze 13 sind nach oben offen und haben parallele Seitenwände mit einem bestimmten Abstand.

Im Übergangsbereich zwischen dem einen Teil der Strahlformungsmittel bildenden mittleren Abschnitt des Lagerschalenelements 10 und dem Hülsenbereich des Lagerschalenelements 10 ist eine Schulter gebildet, auf der eine umlaufende Dichtung 14 aufliegt. Diese Dichtung 14 weist einen angenähert dreieckigen Querschnitt mit abgerundeten Ecken auf.

In das Innere des Lagerschalenelementes 10 ist von dessen freiem Ende her ein Kugelelement 15 eingesetzt. Das Kugelelement 15 enthält eine durchgehende Bohrung 16, die in dem in das Innere des Brausekopfgehäuses gerichteten Bereich offen ist. Am gegenüberliegenden äußeren Ende geht das Kugelelement 15 in einen zylindrischen Ansatz 17 über, der in seinem Inneren eine verbreiterte Öffnung 18 mit einem Innengewinde 19 aufweist. Mit diesem Innengewinde 19 kann der Ansatz 17 auf eine mit einem Außengewinde versehene Wasserleitung aufgeschraubt werden.

An zwei gegenüberliegenden Seiten sind in das Kugelelement 15 je eine Sacklochbohrung eingebracht, deren Achsen den Mittelpunkt 20 des Kugelelements 15 schneiden. Beide Sacklochbohrungen sind in gegenseitiger Verlängerung angeordnet. In jeder Sacklochbohrung ist ein Wellenstumpf 21 eingesetzt, der über die Oberfläche des Kugelelements 15 um einen der Wanddicke des Lagerschalenelements 10 entsprechenden Betrag vorsteht.

Beim Einsetzen des Kugelelements 15 in das Lagerschalenelement 10. werden die Wellenstümpfe 21 in die Schlitze 13 eingesetzt. Die Breite der Schlitze 13 entspricht dem Durchmesser der zylindrischen Wellenstümpfe 21.

Nach dem Einsetzen des Kugelelements 15 in das Lagerschalenelement 10 wird von der hinteren Seite her ein zweites Lagerschalenelement 22 auf das Kugelelement 15 aufgesetzt. Anschließend wird eine Außenhülse 23 über das Kugelelement aufgestülpt und in das Außengewinde 9 des Ansatzes 8 eingeschraubt. Die Außenhülse 23 liegt mit einer Schulter 24, die parallel zur Rückseite 2 des Brausekopfgehäuses verläuft, auf einer Gegenschulter des Lagerschalenelements 22 auf. Der Außendurchmesser des Lagerschalenelements 22 oberhalb der Schulter entspricht dem Innendurchmesser der Öffnung der Außenhülse 23 in ihrem Endbereich. Dadurch wird das Lagerschalenelement 22 festgelegt, das mit seiner Innenfläche auf der Außenseite des Kugelelements 15 aufliegt. Durch eine Anpressung an die Dichtung 14, die aus Gründen der besseren Darstellung in der Zeichnung mit einem Abstand gezeichnet ist, erfolgt eine Abbremsung der Kugelschalenlagerung gegenüber dem Kugelelement 15, so dass der Brausekopf in jeder Stellung fest steht.

Bei einer Schwenkbewegung des Brausekopfgehäuses um eine senkrecht zur Papierfläche liegende Achse wandern die Kegelstümpfe 21 in den Schlitzen 13 auf und ab. Bei einer Verschwenkung um eine in der Papierfläche liegende Achse wirken die Wellenstümpfe 21 als Achse. Die Verschwenkung wird also nicht behindert. Bei einer Verdrehung des Brausekopfgehäuses um die Längsachse des Kugelelements 15 nimmt die Kugellagerung, gebildet aus den Lagerschalenelementen 10 und 22, das Kugelelement 15 auf Grund des Eingreifens der Wellenstümpfe 21 in die Schlitze 13 mit. Damit ist eine drehfeste formschlüssige Verbindung in Drehrichtung gegeben, ohne dass die Verschwenkung an irgendeiner Stelle erschwert wird.

Der Querschnitt der Figur 2 zeigt, dass das Lagerschalenelement 10 in diesem Bereich als zylindrische Hülse ausgebildet ist, an deren Innenseite das Kugelelement 15 überall anliegt. Die Wellenstümpfe 21 greifen in die Schlitze so ein, dass sie beidseits ohne Zwischenraum geführt sind.

Bei der Ausführungsform nach Figur 1 und 2 sind die Wellenstümpfe 21 in radialen Bohrungen des Kugelelements 15 angeordnet. Die Befestigung braucht nur so zu sein, dass die Wellenstümpfe 21 bei der Montage nicht herausfallen.

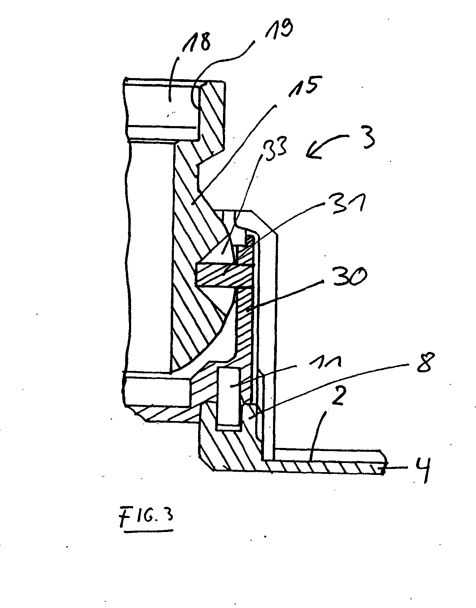

Bei der Ausführungsform nach Figur 3 ist schematisch ein Wellenstumpf 31 an dem Lagerschalenelement 30 ausgebildet, der in eine Ausnehmung 33 in dem Kugelelement 15 eingreift. Die Ausnehmung 33 ist so geformt, dass eine Verschwenkung des Kugelelements 15 aus der dargestellten neutralen Stellung in beide Richtungen um einen bestimmten Winkelbetrag möglich ist. Diese Ausführung eignet sich insbesondere dann, wenn der Wellenstumpf 31 nachträglich eingesetzt wird.

Wenn der Wellenstumpf 31 dagegen an dem Lagerschalenelement 30 angeformt ist, so kann die Ausnehmung 33 als Nut ausgebildet sein, die dann zu dem in Figur 3 unteren Ende hin offen ist, also dem von der Wasserleitung abgewandten Ende.

Zur Befestigung eines Brausekopfs an dem Ende einer Wasserleitung wird ein Schwenkgelenk vorgesehen, das mit Hilfe eines in eine Kugelschalenlagerung eingreifenden Kugelelements eine Schwenkbewegung ermöglicht, während zwei Wellenstümpfe eine Drehbewegung verhindern. Dadurch wird es möglich, den Brausekopf durch Angreifen an dem Brausekopfgehäuse selbst mit dem Ende der Wasserleitung zu verschrauben.

## Patentansprüche

1. Brausekopf, mit
- einem Brausekopfgehäuse,
- einer an der Rückseite (2) des Brausekopfgehäuses angeordneten Wasserleitungsanschlusseinrichtung (3), und
- einem Schwenkgelenk zwischen der Anschlusseinrichtung (3) und dem Brausekopfgehäuse,
**dadurch gekennzeichnet, dass**
- die Anschlusseinrichtung (3) zum Anschließen an einer Wasserleitung durch eine Drehbewegung um eine Drehbefestigungsachse ausgebildet ist,
- das Schwenkgelenk, nach Art eines Kardangelenks, Mittel zur formschlüssigen Verbindung zwischen dem Brausekopfgehäuse und der Anschlusseinrichtung (3) in Drehrichtung um die Drehbefestigungsachse und Mittel zur Verschwenkung des Brausekopfgehäuses gegenüber der Anschlusseinrichtung (3) aufweist.

2. Brausekopf nach Anspruch 1, bei dem das Schwenkgelenk ein Kugelelement (15) aufweist, das in einer Kugelschale (10, 22) schwenkbar gelagert ist.

3. Brausekopf nach Anspruch 2, bei dem die Kugelschale aus zwei Teilschalen (10, 22) aufgebaut ist, die das Kugelelement (15) zwischen sich einschließen.

4. Brausekopf nach Anspruch 2 oder 3, bei dem in dem Schwenkgelenk mindestens ein Wellenstumpf (21, 31) vorgesehen ist, dessen Achse durch den Kugelmittelpunkt (20) des Kugelelements (15) hindurchgeht.

5. Brausekopf nach Anspruch 4, bei dem der Wellenstumpf (21, 31) in einem (15; 10, 22) der beiden Teile des Schwenkgelenks befestigt und in einer in axialer Richtung des Wellenstumpfs (21, 31) verlaufenden Ausnehmung des jeweils anderen (10, 22; 15) Teils des Schwenkgelenks geführt ist, deren Breite dem Durchmesser des Wellenstumpfs (21, 31) entspricht.

6. Brausekopf nach Anspruch 5, mit zwei in gegenseitiger Verlängerung angeordneten Wellenstümpfen (21, 31).

7. Brausekopf nach Anspruch 2 oder 3, bei dem in dem Schwenkgelenk eine durchgehende Welle vorgesehen ist, deren Achse durch den Kugelmittelpunkt (20) des Kugeletements (15) hindurchgeht.

8. Brausekopf nach einem der Ansprüche 5 oder 6, bei dem mindestens ein Wellenstumpf (21) in dem Kugelelement (15) befestigt ist und die Ausnehmung als Schlitz (13) oder Nut in mindestens einem Kugelschalenelement (10) ausgebildet ist.

9. Brausekopf nach Anspruch 8, bei dem der Schlitz (13) in dem Kugelschalenelement (10) im Bereich seines einen Endes offen ist.

10. Brausekopf nach einem der Ansprüche 5 oder 6; bei dem mindestens ein Wellenstumpf (31) in einem Kugelschalenelement (30) befestigt ist und die Ausnehmung (33) in dem Kugelelement (15) ausgebildet ist.

11. Brausekopf nach Anspruch 10, bei dem die Ausnehmung (33) in dem Kugelelement (15) als Nut ausgebildet ist.

12. Brausekopf nach einem der Ansprüche 2 bis 11, bei dem das Kugelelement (15) an einem der Anschlusseinrichtung (3) zugeordneten Bauteil ausgebildet ist und die Kugelschale (10, 22) an einem dem Brausekopfgehäuse zugeordneten Bauteil ausgebildet ist.

## Claims

1. Shower head, comprising
- a shower head housing,
- a water pipe connection device (3) arranged on the rear face (2) of the shower head housing and
- a swivel joint between the connection device (3) and the shower head housing,
**characterized in that**
- the connection device (3) is designed for connection to a water pipe by a rotary movement about a rotary fastening axis,
- the swivel joint comprises, in the manner of a cardan joint, means for a form fitting connection between the shower head housing and the connection device (3) in the rotary direction about the rotary fastening axis and means for swivelling the shower head housing relative to the connection device (3).

2. Shower head according to Claim 1, wherein the swivel joint has a ball element (15) swivellably mounted inside a ball cup (10, 22).

3. Shower head according to Claim 2, wherein the ball cup is made of two part-cups (10, 22) enclosing the ball element (15) between them.

4. Shower head according to Claim 2 or 3, wherein at least one shaft stub (21, 31) whose axis passes through the ball centre point (20) of the ball element (15) is provided inside the swivel joint.

5. Shower head according to Claim 4, wherein the shaft stub (21, 31) is fastened in one (15; 10, 22) of the two parts of the swivel joint and is guided inside a recess of the other (10, 22; 15) part of the swivel joint running in the axial direction of the shaft stub (21, 31), the width of said recess corresponding to the diameter of the shaft stub (21, 31).

6. Shower head according to Claim 5, comprising two shaft stubs (21, 31) arranged in a mutual extension.

7. Shower head according to Claim 2 or 3, wherein a continuous shaft, whose axis passes through the center (20) of the ball element (15), is provided in the swivel joint.

8. Shower head according to one of Claims 5 or 6, wherein at least one shaft stub (21) is fastened inside the ball element (15) and the recess is designed as a slot (13) or groove in at least one ball cup element (10).

9. Shower head according to Claim 8, wherein the slot (13) in the ball cup element (10) is open in the area of its one end.

10. Shower head according to one of Claims 5 or 6, wherein at least one shaft stub (31) is fastened in a ball cup element (30) and the recess (33) is provided in the ball element (15).

11. Shower head according to Claim 10, wherein the recess (33) is provided as a groove in the ball element (15).

12. Shower head according to one of Claims 2 to 11, wherein the ball element (15) is formed on a component associated with the connection device (3) and the ball cup (10, 22) is formed on a component associated with the shower head housing.

## Revendications

1. Pomme de douche, comprenant
- un corps de pomme de douche,
- un dispositif de raccordement de conduite d'eau (3) disposé sur la face arrière (2) du corps de pomme de douche, et
- une articulation pivotante entre le dispositif de raccordement (3) et le corps de pomme de douche,
**caractérisée en ce que**
- le dispositif de raccordement (3) est conçu pour être raccordé à une conduite d'eau par un mouvement rotatoire autour d'un axe de fixation rotative,
- l'articulation pivotante présente, à la manière d'un joint de Cardan, des moyens de liaison par complémentarité de forme entre le corps de pomme de douche et le dispositif de raccordement (3) dans le sens de rotation autour de l'axe de fixation rotative, et des moyens permettant le pivotement du corps de pomme de douche par rapport au dispositif de raccordement (3).

2. Pomme de douche selon la revendication 1, dans laquelle l'articulation pivotante présente un élément sphérique (15) qui est logé de manière pivotante dans une coque (10, 22).

3. Pomme de douche selon la revendication 2, dans laquelle la coque est constituée de deux coques partielles (10, 22) qui enserrent entre elles l'élément sphérique (15).

4. Pomme de douche selon la revendication 2 ou 3, dans laquelle est prévu dans l'articulation pivotante au moins un bout d'arbre (21, 31) dont l'axe passe par le centre (20) de l'élément sphérique (15).

5. Pomme de douche selon la revendication 4, dans laquelle le bout d'arbre (21, 31) est fixé dans l'une (15 ; 10, 22) des deux parties de l'articulation pivotante et se loge dans un évidement de l'autre (10, 22 ; 15) partie de l'articulation pivotante, ledit évidement s'étendant dans le sens axial du bout d'arbre (21, 31), et dont la largeur correspond au diamètre du bout d'arbre (21, 31).

6. Pomme de douche selon la revendication 5, comprenant deux bouts d'arbre (21, 31) disposés dans le prolongement l'un de l'autre.

7. Pomme de douche selon la revendication 2 ou 3, dans laquelle est prévu dans l'articulation pivotante un arbre ininterrompu dont l'axe passe par le centre (20) de l'élément sphérique (15).

8. Pomme de douche selon l'une des revendications 5 ou 6, dans laquelle au moins un bout d'arbre (21) est fixé dans l'élément sphérique (15) et l'évidement est conçu en tant que fente (13) ou gorge dans au moins un élément de coque (10).

9. Pomme de douche selon la revendication 8, dans laquelle la fente (13) dans l'élément de coque (10) est ouverte dans la zone de l'une de ses extrémités.

10. Pomme de douche selon l'une des revendications 5 ou 6, dans laquelle au moins un bout d'arbre (31) est fixé dans un élément de coque (30) et l'évidement (33) est formé dans l'élément sphérique (15).

11. Pomme de douche selon la revendication 10, dans laquelle l'évidement (33) est conçu en tant que gorge dans l'élément sphérique (15).

12. Pomme de douche selon l'une des revendications 2 à 11, dans laquelle l'élément sphérique (15) est formé sur un composant associé au dispositif de raccordement (3) et la coque (10, 22) est formée sur un composant associé au corps de pomme de douche.
